# EUROPEAN PATENT APPLICATION

(11) **EP 4 572 090 A1**
(43) Date of publication of application: **18.06.2025**
(21) Application number: 23216605.8
(22) Date of filing: 14.12.2023
(51) Int. Cl.: H02K 1/02, H02K 1/27, H02K 15/03, H02K 1/276, H02K 1/2793

(54) **ROTOR FOR AN ELECTRIC MACHINE**

(71) Applicant: Schaeffler Technologies AG & Co. KG, 91074 Herzogenaurach (DE)
(72) Inventor: Prabhakaran, Ajith Kumar, 80687 München (DE)
(74) Representative: Vitesco Technologies

(57) **Abstract**

The present invention relates to a permanent magnet rotor (10) for an electric machine, comprising at least one permanent magnetic element (12) arranged for interacting with a magnetic element of a stator (22) for bringing the rotor (10) in rotation, wherein the permanent magnetic element (12) comprises at least two different layers, wherein a first layer (16) of the at least two layers comprises a first magnetic or magnetizable material (28) and wherein a second layer (18) of the at least two layers comprises a second magnetic or magnetizable material (30), wherein the first magnetic or magnetizable material (28) comprises NdFeB and wherein the second magnetic or magnetizable material (30) comprises SamCo.

## Description

The present invention relates to a permanent magnet rotor with a permanent magnet for an electric machine. In particular, the present invention relates to a permanent magnet rotor for an electric machine which has an magnetic element with a defined structure comprising at least two different magnetic or magnetizable materials. The present invention further relates to an electric machine comprising such a rotor and to a method of forming a rotor for an electric machine.

Several electric machines are known which may be used for example as traction drives in electrically driven vehicles. Such electric machines may comprise a rotor having a magnetic structure for interacting with magnetic structure of a stator in order to drive the rotor.

It was found that the prior art still may have room for improvements, especially with regard to temperature stability, size and costs. In particular, it was found that there is a need for a stable or improved performance at peak power and/or torque performance required in electric machines at higher operating temperature. Size of the machine is directly proportional to required torque, so that a reduced size may also be very beneficial with this regard.

It is therefore the object of the present invention to provide a solution which allows overcoming at least one disadvantage of the prior art at least partially. In particular, it is an object of the present invention to provide a solution by which a rotor of an electric machine may be improved in at least one of higher temperature stability, size and costs.

The object is solved by a permanent magnet rotor for an electrical machine with the features of claim 1. The problem is further solved by a method according to claim 12 and by an electric machine with the features of claim 14. Preferred embodiments of the invention are described in the dependent claims, in the description or in the figures, wherein further features described or shown in the dependent claims or in the description or in the figures may constitute a feature of the invention individually or in any combination, unless the opposite is clearly apparent from the context.

Described is a permanent magnet rotor for an electric machine, comprising at least one permanent magnetic element arranged for interacting with a magnetic structure of a stator for bringing the rotor in rotation, wherein the permanent magnetic element comprises at least two different layers, wherein a first layer of the at least two layers comprises a first magnetic or magnetizable material and wherein a second layer of the at least two layers comprises a second magnetic or magnetizable material, wherein the first magnetic or magnetizable material comprises NdFeB and wherein the second magnetic or magnetizable material comprises SamCo.

Such a rotor may provide significant advantages over solutions of the prior art.

The described permanent magnet rotor is especially usable in automotive applications, i.e. as a rotor of an electric machine, also called electric motor. As generally known in the art, the rotor is brought in rotation by a stator in order to drive at least one wheel of a vehicle. In order to achieve this, the rotor according to the present invention comprises at least one permanent magnetic element, which thus have or may be processed to have permanent magnetic properties. The at least one or preferably the plurality of permanent magnetic elements of the rotor are thus arranged for interacting with a magnetic structure of a stator for bringing the rotor in rotation. The specific size and geometry of the permanent magnetic element or elements may be chosen in dependence of the specific application as known from the person skilled in the art. The magnetic structure of the stator may for example comprise a coil arrangement.

The at least one permanent magnetic element comprises at least two different layers, wherein a first layer of the at least two layers comprises a first magnetic or magnetizable material and wherein a second layer of the at least two layers comprises a second magnetic or magnetizable material. The layers thus differ from one another with regard to the material they comprise at least in the majority of materials used for this layer. With regard to the magnetic or magnetizable material, the layers may be separated from each other having a sharp border or they may merge into each other. However, it may be preferred that the layers are separated with each other by a sharp border.

A sharp border in the sense of the present invention shall particularly mean that the first layer and the second layer, determined by the composition of the respective layer and/or the grain size of SamCo and NdFeB and thus of the respective magnetic or magnetizable material grains, abut each other.

Therefore, there is no intermediate layer which is formed between the respective layers which differs from the contents of the respective layers. Solely, a thin film layer may under circumstances be formed between the layers by the following effect which exemplarily arises when the layers are connected by a sintering process and particularly under pressure.

In case two grains with different growth size are compressed to each other, the bulk is separated into two interpenetrating grains and they comprise the matrix and recrystallization occurs. The size of the newly formed grains is much larger than the individual grain sizes of the matrix. If the pressure increases, the newly formed coarse grains freeze the local concentration of the remaining dissolved grains that existed before recrystallization, so that no grain growth takes place in this area. After the diffusion process, a thin layer may be formed between the two layers, the thickness of which is only a few atoms, usually about 5-10 atoms. This is called a sharp boundary between the layers in the sense of the present invention.

The advantage of such a sharp border may especially be seen in the fact that the properties of the magnetic element are very defined and reproducible. As a result, the working behavior and the performance of the magnetic element and thus of the electric machine are also very defined. Therefore, the danger, that the properties of the magnetic element are not in the desired range and thus the danger of damages or undesired service-needs are significantly reduced.

The material of the respective layers is either a magnetic material and is a permanent magnet and thus has permanent magnetic properties or it may be a magnetizable material and may thus be processed to receive permanent magnetic properties.

According to the present invention, the first magnetic or magnetizable material comprises NdFeB and the second magnetic or magnetizable material comprises SamCo. In other words, the first layer comprises or may consist of NdFeB and the second layer comprises or consists of SamCo. This shall particularly mean that the first layer comprises NdFeB in an amount of ≥ 50 wt.-%, preferably of ≥ 80 wt.-%, especially preferred of ≥ 98 wt.-% relating to the magnetic or magnetizable materials provided in that layer. As an example, the first layer may comprise only one magnetic or magnetizable material, which is NdFeB. Correspondingly, the second layer comprises SamCo in an amount of ≥ 50 wt.-%, preferably of ≥ 80 wt.-%, especially preferred of ≥ 98 wt.-% relating to the magnetic or magnetizable materials provided in that layer. As an example, the second layer may comprise only one magnetic or magnetizable material, which is SamCo.

Also more than two layers of different magnetic or magnetizable materials, also described as magnet grains, may be provided, wherein at least two of these layers each separately comprise the first magnetic or magnetizable material comprising NdFeB and the second magnetic or magnetizable material comprising SamCo.

As known in the art, NdFeB is a permanent magnet made from an alloy of neodymium, iron, and boron. Furthermore, SamCo is a permanent magnet made from an alloy of samarium and cobalt.

Especially the provision of two different layers in the permanent magnetic element, each of the layers comprising a different permanent magnetic material as defined above may provide significant advantages over prior art solutions.

It was surprisingly found that the following properties could by combined in a synergistic manner. Samarium cobalt magnet withstands a very high temperature and the reversible temperature coefficient is very low, thus resulting in the operating thermal region to be extended to certain degree and up to 300 °C being possible. At the same time, the neodymium magnets produce a very strong magnetic field and its reversible temperature coefficient is relatively high when compared with SamCo magnets.

The most advantageous combination of both Neodymium and Samarium cobalt magnets have been considered by using two layers according to the invention and thus two regions in the form of different layers have been arranged in such way that a thermal stable region and a stable magnetic remanence region were formed. The back end region is called thermal stable region where the maximum remanence gets unchanged or only minimal change occurs in the influence of temperature, i.e. the layer comprising SamCo. The front region is called magnetic stable region and it is that region, where the magnetic remanence is higher at lower temperature, i.e. the layer comprising NdFeB. With this regard, the front region might be that region of the magnetic element which is arranged to be located adjacent to the stator, wherein the back end region is that region or layer which is located averted to the stator.

While considering the operation of an electric machine, at the continuous operation, both magnets produce high and stable magnetic flux density into the airgap at lower temperature within the limit of cooling medium. The increased magnetic flux in the airgap results in lower copper turns and hence the lesser joule losses, which in turn effectively supports the increased efficiency of the motor. At the peak operation, the internal temperature raised and Neodymium magnets produce lesser remanence but SamCo magnets operates with the same remanence or less deviated remanence. Thus, the rate of change of magnetic flux density in the airgap remains the same or less deviated from the continuous operation and may produce higher torque in the machine at peak operation.

Therefore, a rotor according to the invention can withstand even high temperatures and can further produce high stable and constant remanence in the airgap. In conclusion, the following advantageous effects could be reached.

The rotor may withstand also harsh conditions and is well usable as a rotor in electric machines. Stable airgap flux density up to the operating temperature of 220 °C or even more may be achieved.

Due to the arrangement of the magnetic elements, a significant cost reduction may be reached which allows applications in wide fields. Further, as high temperatures may be used, it is possible to avoid unnecessary costs as well as equipment and thus space and weight for cooling purposes. This is especially beneficial when used in electric machines of electrically driven vehicles. An uncompromised performance of the electric machine may thus be reached and in detail, improved torque and performance at medium and high speed operating regions is possible.

Apart from that, it is possible to reduce usage of High Rare Earth Elements (HREE) up to 70%, which is a very beneficial property with regard to sustainability and costs. Cost of the magnets may generally be reduced to up to 40% with regard to prior art solutions.

The above-defined layer arrangement allows a solution for avoiding thermal runaway of magnets and stable airgap flux density at peak operation of any electric machines, such as PMSM machines, regardless if it is an IPM, SPM or AFM. This concept could even be suitable to any range/topologies/types of electric motors currently existed.

Apart from that, due to the very good working conditions, weight & size of the magnetic elements could be minimized in a range of 25% to 45%, relating to prior art solutions.

The above advantages are not achieved in the prior art. According to the prior art, Sintered NdFeB and SamCo magnets have been widely used in electric vehicles, wind turbines and traction motors as a manner of achieving excellent magnetic properties. However, it is found that magnetic properties of the sintered NdFeB magnets drop dramatically with increasing work temperature, which limits their application in some fields. Since the Dy₂Fe₁₄B and Tb₂Fe₁₄B phases show much higher magneto crystalline anisotropic fields (HA) than the Nd₂Fe₁₄B phase, higher-coercivity Nd-Fe-B magnets can be obtained through replacing part of the Nd with heavy rare earth element (HREE). This approach is commonly used to increase the coercivity of sintered Nd-Fe-B magnets in industry, wherein however, costs and applicability are deteriorated.

SamCo magnets are suitable also at relatively high temperatures using excellent temperature characteristics of up to >300 °C. In the same way NdFeB magnets show strong remanence in nature but relatively low thermal stability at peak motor operation. This makes resemblance on the continuous and peak operation of the machine weaker at large temperature rise. It also destroys the magnet permanently and hence the motor. To control the rotor temperature, using direct rotor cooling is not an easy task as it requires higher cost and sophisticated control technique. This, however, is overcome by the solution according to the present invention.

Thus, the rotor according to the invention provides significant advantages over prior art solutions especially with regard to temperature stability, size and costs.

Preferably, the ratio of the thickness of the first layer comprising NdFeB relative to the thickness of the second layer comprising SamCo lies in the range of 20:80 to 80:20. It was found that especially the above-defined thickness ranges may be very beneficial in order to achieve the synergistic effect of different layers comprising NdFeB and SamCo, respectively.

With regard to the respective thicknesses, it may be provided that the thickness of the first layer and the thickness of the second layer are constant or that the thickness of at least one of the first layer and of the second layer is inconstant, and the thickness is thus varying through the extension of the layer. Thus, variable thicknesses through the magnetic boundary layer may be reached which allows further adapting the magnetic properties to the desired application. For example, it may be adjusted, in which area the minimum demagnetization effect is required due to possible temperature raise.

It may further be preferred that the magnetic element comprises a multilayer arrangement in which the multilayer arrangement comprises at least two layers comprising NdFeB and at least two layers comprising SamCo. The layers with different magnetic materials are preferably provided in alternating order. This allows to enlarge the magnetic force and thus to reduce the size and thus the weight of the magnetic elements even further. In more detail, the total magnetic product energy may be increased and hence the net size of the magnet can be minimized. In addition, this embodiment helps to protect the NdFeB magnet during high thermal demagnetization at peak operation for a long time. Preferably, the top layer is the layer comprising SamCo which then protects the underneath layer of NdFeB. This reduces the required usage of NdFeB and further improves the total magnetic structure with good magnetic remanence.

In a further preferred embodiment, it may be provided that at least one of the first and the second layer comprises at least one region of first magnetic material and at least one region of second magnetic material. For example, there may be one region of second material being surrounded in that layer, i.e. in a 2 dimensional view, by first material or vice versa. It may further be provided that there may be a plurality of regions of second material each being surrounded in that layer by first material or vice versa. This allows a further very beneficial adaption to the respective application and its demands. The respective regions may preferably be evenly distributed in the layer and can be selected by general requirements, such as the demagnetization region requirements. The selection of position and thickness of the respective region and layers can be varied by application or as per the demagnetization region requirements. Again, the grain size can be varied by application and requirements.

It may further be preferred that the size of NdFeB grains provided in the first layer comprising NdFeB is in the range of ≥ 75µm to ≤ 115µm. Additionally, or alternatively, it may be preferred that the size of SamCo grains provided in the second layer comprising SamCo is in the range of ≥ 35µm to ≤ 45 µm. These values ensure a low filling factor for the respective layers. Especially such filling factors allow the before described synergistic properties to be reached especially effectively. Specifically, suitable magnet grain proportion as described above allows selecting the magnet design to retain the requirements at higher temperature and remanence.

It may further be preferred, that heavy rare earth materials are present in the at least one magnetic element in an amount of up to ≤ 30 wt.-%, relating to the magnetic element. For example, the magnetic elements are free of heavy rare earth materials. Providing the rotor with a respectively low amount of heavy rare earth materials allows significant advantages with regard to sustainability and costs. This embodiment becomes possible especially due to the arrangement comprising to layers with different magnetic or magnetizable material and thus the reached magnetic properties of the one or more magnetic elements.

With regard to the layer sequence, the first layer comprising NdFeB and the second layer comprising SamCo may be arranged directly adjacent to each other. According to this embodiment, the synergistic effect of both layers may be provided in an especially effective manner.

According to a further preferred embodiment, the magnetic element may comprise at least one identification mark, wherein the identification mark identifies at least one of the first magnetic material, the second magnetic material and the magnetic polarization. It may be especially preferred that the identification mark is distinctive in terms of at least one of geometry, size and color.

In detail, it may be provided that a plurality of identification marks is provided, which may be formed as square, triangle or circle and may have different colors and/or sizes, for example. A first identification mark may identify the first layer and the first magnetic material, a second identification mark may identify the second layer and the second magnetic material and a third identification mark may identify the magnetic polarization direction and thus for example a north indication.

This embodiment allows a fast and simple way to allow an identification of the respective properties of the layers of the magnetic element as well as of its components. This may improve the method of forming respective magnetic elements significantly.

With regard to further technical features and advantages of the rotor, it is referred to the description of the method, the electric machine, the figures and the description of the figures.

Further described is a method of forming a rotor for an electric machine, the method comprising the steps of:
a) Providing a first layer, the first layer comprising NdFeB as a magnetic or magnetizable material;
b) Providing a second layer, the second layer comprising SamCo as a magnetic or magnetizable material.
c) Connecting the first layer and the second layer with each other; and
d) Using the product of step c) as a magnetic element in a process of forming a rotor for an electric machine.

According to this method, particularly a rotor as described before may be formed.

The method comprises as step a) to provide a first layer, the first layer comprising NdFeB as a magnetic or magnetizable material and as step b) to provide a second layer, the second layer comprising SamCo as a magnetic or magnetizable material. For example, the layers may be formed in a mold which is subsequently filled with NdFeB and SamCo.

After having formed the layers which might be formed directly adjacent to each other, the layers may be connected with each other. This may be realized by bonding or sintering the respective layers. Accordingly, the layers may be subjected to increased temperature and pressure in order to connect the layers. As exemplary but very well suitable conditions, temperatures in a range of ≥ 1150 °C to ≤ 1250 °C and pressures in the range of ≥ 5kbar to ≤ 10kbar may be used.

After a sintering process or generally speaking after connecting the layers, an annealing step may be realized. Such a step may include processing the formed product at elevated temperatures, such as at temperatures in a range of ≥ 350 °C, such as at 540°C, for example. The heating time may be chosen in dependence of the material used. The product is then cooled down to room temperature. Annealing increases the initial permeability, the maximum permeability, and the magnetic induction. Although it decreases the coercivity, this is within an acceptable range. Therefore, the quality of the magnetic element may further be improved and thus the quality of the electric machine may also be improved.

Having connected the layers, respective magnetic elements may be formed. These may be used directly in case they have permanent magnetic properties or, in case magnetizable materials are used, they may be processed to have permanent magnetic properties. This may be realized by high voltage flowing through the magnetic element for a particular small time period particularly in a direction through both layers. Suitable conditions comprise ≥3000 Volt to ≤ 5000 Volt for a range of energy product of ≥ 280 kJ/m³ to ≤ 500 kJ/m³.

Afterwards, the magnetic elements may be formed and used, according to step c), in a process of forming a rotor for an electric machine. This step may comprise to attach the one or more magnetic elements to a base body, or back plate, respectively, of a rotor, which is generally equipped as known in the art. Essentially, only the permanent magnetic elements which are generally known for rotors may be exchanged by the permanent magnetic elements which are formed according to the present invention.

With regard to further technical features and advantages of the method, it is referred to the description of the rotor, the electric machine, the figures and the description of the figures.

Further described is an electric machine, comprising a rotor and a stator, characterized in that the rotor is arranged as described before. The electric machine may generally be any electric machine, such as a radial flux machine or an axial flux machine of any kind.

As generally known in the art, the electric machine comprises an arrangement of a rotor and a stator, wherein the stator has a magnetic structure, such as a coil arrangement. This magnetic structure of the stator is arranged to bring the rotor in rotation by interacting with one or more magnetic elements of the rotor.

Due to the fact that the rotor is arranged as described above, the electric machine provides the advantages as described with regard to the rotor. Particularly, a stable airgap flux density even at higher temperatures may be reached together with improved torque and power factor (PF) at medium and even at higher speeds. Heavy rare earth materials may be saved up to 70% compared to prior art solutions and generally, cost and size of the rotor may be minimized.

With regard to further technical features and advantages of the electric machine, it is referred to the description of the rotor, the method, the figures and the description of the figures.

The invention is further explained below with reference to the figures, wherein individual or several features of the figures can be a feature of the invention either individually or in combination. Furthermore, the figures are only exemplary but in no way limiting the present invention.
Fig. 1 shows a view of a part of a rotor in an embodiment of the present invention;
Fig. 2 shows a sectional side view through the rotor of figure 1;
Fig. 3 shows a sectional side view through a rotor-stator-arrangement;
Fig. 4 relates to a step of forming a magnetic element according to a first embodiment;
Fig. 5 relates to a step of forming a magnetic element according to a further embodiment;
Fig. 6 relates to a step of forming a magnetic element according to a further embodiment;
Fig. 7 relates to a step of forming a magnetic element according to a further embodiment;
Fig. 8 relates to a step of forming a magnetic element according to a further embodiment;
Fig. 9 shows a view onto a first layer of a magnetic element; and
Fig. 10 shows a view onto a second layer of a magnetic element.

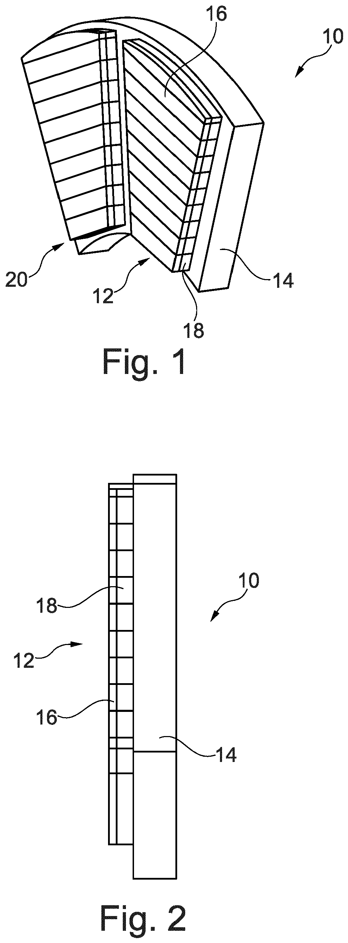

Figure 1 shows a permanent magnet rotor 10 for an electric machine of an electrically driven vehicle. The rotor 10 comprises at least one permanent magnetic element 12 which is attached to a back plate 14, such as made from iron, of the rotor 10. Generally, magnetic elements 12 may be positioned on the back plate 14 as known in the art for respective rotors 10 in order to interact with a magnetic structure 21 of a stator 22 for bringing the rotor 10 in rotation.

It Is shown that the permanent magnetic element 12 according to figure 1 comprises two different layers, wherein a first layer 16 of the at least two layers comprises a first magnetic material 28 and wherein a second layer 18 of the at least two layers comprises a second magnetic material 30, wherein the first magnetic material 28 comprises NdFeB and wherein the second magnetic material 30 comprises SamCo. The magnetic element 12 functions as north pole.

The further shown magnetic element 20 correspondingly functions as south pole.

Figure 2 shows a sectional side view through the magnetic element 20. It can be seen that, although the first layer 16 and the second layer 18 may have the same thickness, the thickness of the first layer 16 is 30% of the whole thickness of the first layer 16 and the second layer 18 and that the thickness of the second layer 18 is 70% of the whole thickness of the first layer 16 and the second layer 18. Generally, it may be provided that the ratio of the thickness of the first layer 16 comprising NdFeB relative to the thickness of the second layer 18 comprising SamCo lies in the range of 20:80 to 80:20.

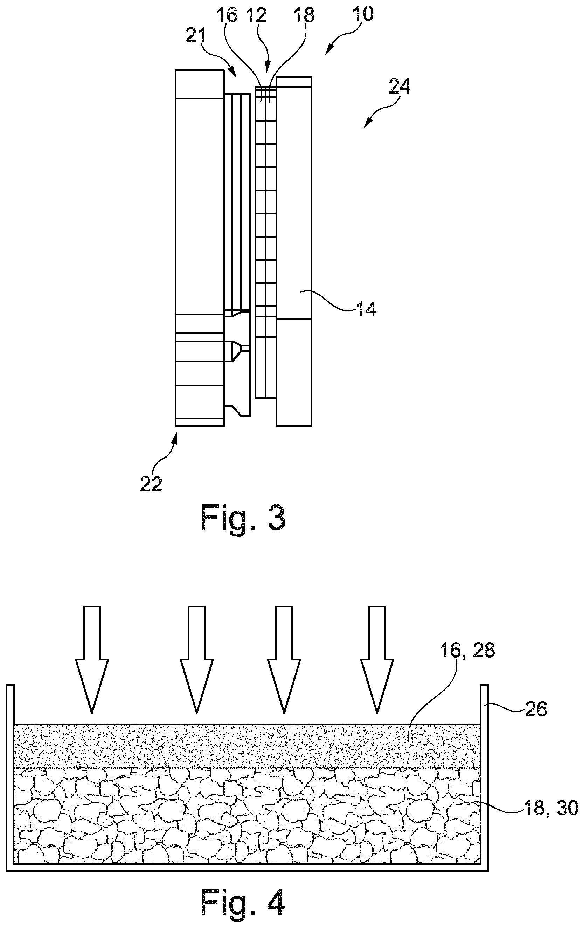

Figure 3 shows the arrangement of a rotor 10 being formed correspondingly to the rotor 10 as shown in figure 2 adjacent to a stator 22. Thus, a rotor-stator-arrangement 24 is shown which may be the central part of an electric machine for an electrically driven vehicle. According to figure 3, the thickness of the first layer 16 equals the thickness of the second layer 18. It is shown that the first layer 16 comprising NdFeB is located adjacent to the magnetic structure 21 of the stator 22.

Figures 4 to 8 relate to methods of forming a magnetic element 12 for a rotor 10 as described before. According to figure 4, it is shown that a first layer 16 is provided comprising NdFeB as first magnetic material 28 exemplarily with a grain size of ≥ 75µm to ≤ 115µm and that a second layer 18 is provided comprising SamCo as second magnetic material 30 exemplarily with a grain size of ≥ 35µm to ≤ 45 µm. Both the first magnetic material 28 and the second magnetic material 28 are respectively provided in a mold 26, or cavity, respectively. The thickness of the second layer 18 may be bigger compared to the thickness of the first layer 16. This arrangement of the first layer 16 and the second layer 18 is then processed at temperatures exemplarily in a range of ≥ 1150 °C to ≤ 1250 °C and pressures in the range of ≥ 5 kbar to ≤ 10 kbar, as shown by the arrows. The resulting structure is then a magnetic element 12 and may be used in the course of forming a rotor 10 as described above. With this regard, an annealing process step may further be included after connecting the layers 16, 18 with each other.

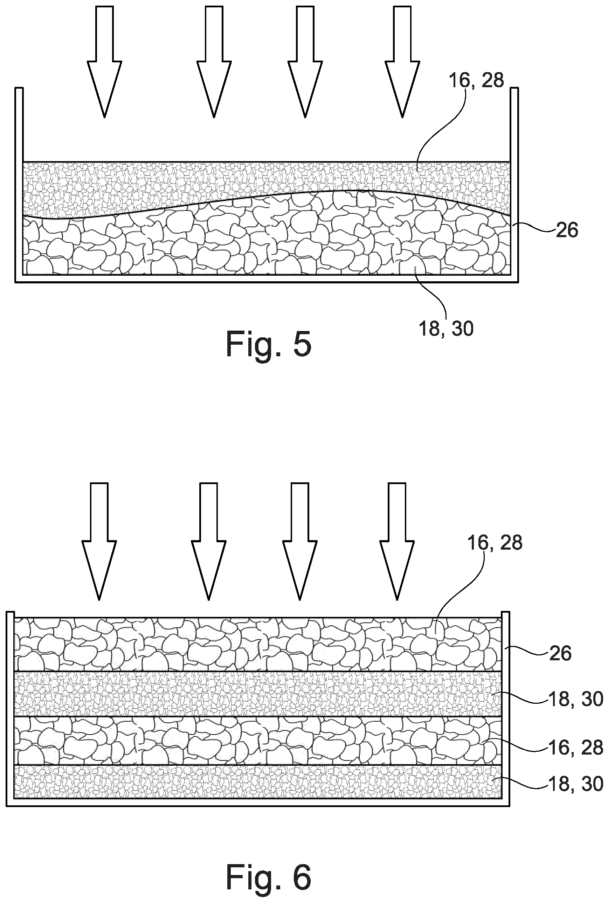

In figures 5 to 8, essentially the same is shown so that the description for figure 4 is also valid for figure 5 to 8.

However, in figure 5, the thickness of the first layer 16 and of the second layer 18 varies through the extension of the respective layer 16, 18.

According to figure 6, a multilayer arrangement is formed, wherein the multilayer arrangement comprises two first layers 16 comprising NdFeB as first magnetic material 28 and two second layers 18 comprising SamCo as second magnetic material 30 which are arranged subsequently. Generally, further layers may respectively be added.

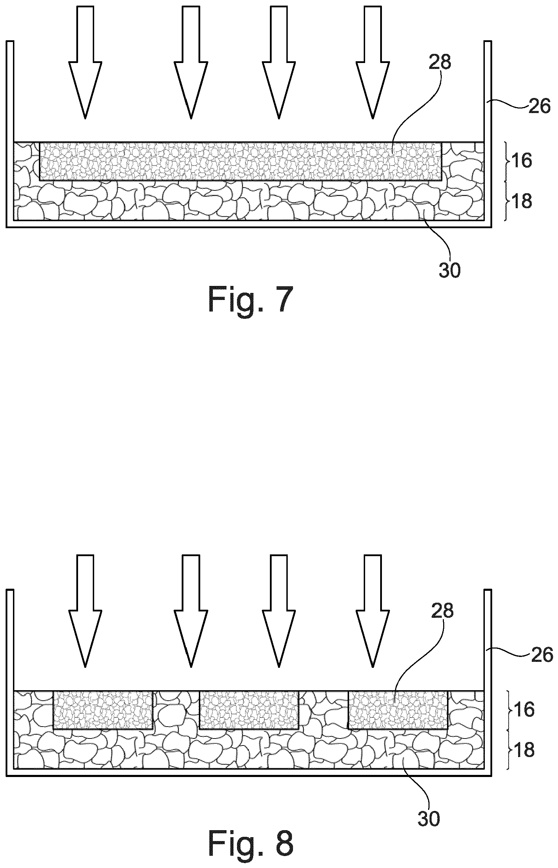

According to figures 7 and 8, the first layer 16 comprises at least one region of first magnetic material 28 and respective regions of second magnetic material 30. In more detail, according to figure 7, one region of first magnetic material 28 is shown which is two-dimensionally surrounded by second magnetic material 30 within the first layer 16. According to figure 8, a plurality of regions of first magnetic material 28 is shown, wherein the regions of first material 28 are two-dimensionally surrounded by second magnetic material 30 within the first layer 16.

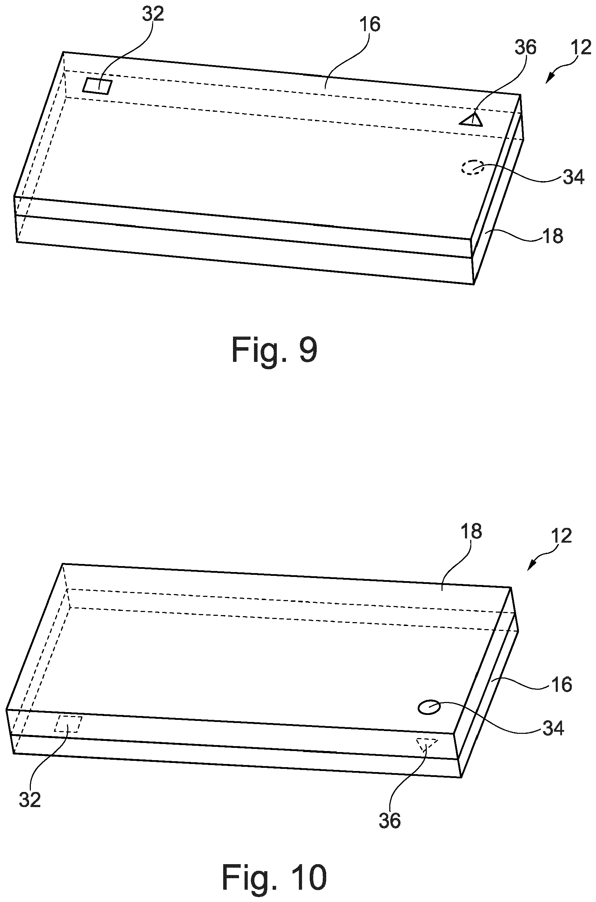

Figures 9 and 10 show a magnetic element, wherein figure 9 shows the element from the top view mainly onto the first layer 16 and figure 10 from the bottom mainly onto the second layer 18.

It is shown that a plurality of identification marks is provided, which may differ in size, geometry and color. A first identification mark 32 formed as a square may identify the first layer 16 and the first magnetic material 28, respectively. A second identification mark 34 formed as a circle may identify the second layer 18 and the second magnetic material 30, respectively. A third identification mark 36 formed as a triangle may identify the magnetic polarization direction and may thus for example be a north indication.

It may further be provided that the Identification marks 32, 34, 36 or the layers 16, 18 as such have different colors, so that also a color code identification is possible.

### Reference Signs

- 10: rotor
- 12: magnetic element
- 14: back plate
- 16: first layer
- 18: second layer
- 20: magnetic element
- 21: magnetic structure
- 22: stator
- 24: rotor-stator-arrangement
- 26: mold
- 28: first magnetic material
- 30: second magnetic material
- 32: first identification mark
- 34: second identification mark
- 36: third identification mark

## Claims

1. Permanent magnet rotor (10) for an electric machine, comprising at least one permanent magnetic element (12) arranged for interacting with a magnetic structure of a stator (22) for bringing the rotor (10) in rotation, **characterized in that** the permanent magnetic element (12) comprises at least two different layers, wherein a first layer (16) of the at least two layers comprises a first magnetic or magnetizable material (28) and wherein a second layer (18) of the at least two layers comprises a second magnetic or magnetizable material (30), wherein the first magnetic or magnetizable material (28) comprises NdFeB and wherein the second magnetic or magnetizable material (30) comprises SamCo.

2. Rotor (10) according to claim 1, **characterized in that** the ratio of the thickness of the first layer (16) comprising NdFeB relative to the thickness of the second layer (18) comprising SamCo lies in the range of 20:80 to 80:20.

3. Rotor (10) according to any of claims 1 or 2, **characterized in that** the size of NdFeB grains provided in the first layer (16) comprising NdFeB is in the range of ≥ 75µm to ≤ 115µm.

4. Rotor (10) according to any of claims 1 to 3, **characterized in that** the size of SamCo grains provided in the second layer (18) comprising SamCo is in the range of ≥ 35µm to ≤ 45 µm.

5. Rotor (10) according to any of claims 1 to 4, **characterized in that** heavy rare earth materials are present in the at least one magnetic element (12) in an amount of up to ≤ 30 wt.-%.

6. Rotor (10) according to any of claims 1 to 5, **characterized in that** the first layer (16) comprising NdFeB and the second layer (18) comprising SamCo are arranged directly adjacent to each other.

7. Rotor (10) according to any of claims 1 to 6, **characterized in that** the thickness of at least one of the first layer (16) and the second layer (18) varies through the extension of the layer (16, 18).

8. Rotor (10) according to any of claims 1 to 7, **characterized in that** the magnetic element (12) comprises a multilayer arrangement, wherein the multilayer arrangement comprises at least two layers comprising NdFeB and at least two layers comprising SamCo.

9. Rotor (10) according to any of claims 1 to 8, **characterized in that** at least one of the first layer (16) and the second layer (18) comprises at least one region of first magnetic material (28) and at least one region of second magnetic material (30).

10. Rotor (10) according to any of claims 1 to 9, **characterized in that** the magnetic element (12) may comprise at least one identification mark (32, 34, 36), wherein the identification mark (32, 34, 36) identifies at least one of the first magnetic material (28), the second magnetic material (30) and the magnetic polarization.

11. Rotor (10) according to claim 10, **characterized in that** the identification mark (32, 34, 36) is distinct in terms of at least one of geometry, size and color.

12. Method of forming a rotor (10) for an electric machine, the method comprising the steps of:
a) Providing a first layer (16), the first layer (16) comprising NdFeB as a magnetic or magnetizable material;
b) Providing a second layer (18), the second layer (18) comprising SamCo as a magnetic or magnetizable material;
c) Connecting the first layer (16) and the second layer (18) with each other; and
d) Using the product of step c) as a magnetic element (12) in a process of forming a rotor (10) for an electric machine.

13. Method according to claim 10, **characterized in that** step c) is performed at temperatures in a range of ≥ 1150 °C to ≤ 1250 °C and at pressures in the range of ≥ 5kbar to ≤ 10kbar.

14. Electric machine, comprising a rotor (10) and a stator (12), **characterized in that** the rotor (10) is arranged according to any of claims 1 to 11.

15. Electric machine according to claim 14, **characterized in that** the electric machine is a radial flux machine or an axial flux machine.
